(19) Europäisches Patentamt
European Patent Office
Office européen des brevets

(11) **EP 1 938 697 B1**

(12) **EUROPEAN PATENT SPECIFICATION**

(45) Date of publication and mention
of the grant of the patent:
**06.07.2016 Bulletin 2016/27**

(51) Int Cl.:
*A23G 9/38* *(2006.01)*  *A23G 9/32* *(2006.01)*
*A23G 9/46* *(2006.01)*

(21) Application number: **07120756.7**

(22) Date of filing: **15.11.2007**

(54) **AERATED FOOD PRODUCTS AND METHOD FOR PRODUCING THEM**

MIT LUFT DURCHSETZTE LEBENSMITTELPRODUKTE UND VERFAHREN ZU IHRER HERSTELLUNG

PRODUITS ALIMENTAIRES AÉRÉS ET PROCÉDÉS DE PRODUCTION DE CEUX-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.12.2006 EP 06126610**

(43) Date of publication of application:
**02.07.2008 Bulletin 2008/27**

(73) Proprietors:
• **Unilever PLC**
**London**
**EC4Y 0DY (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventors:
• **Burmester, Sabina, Silvia, Haenel**
**Bedford, Bedfordshire MK44 1LQ (GB)**
• **Cagnol, Florence, Clotilde**
**Bedford, Bedfordshire MK44 1LQ (GB)**
• **Cox, Andrew, Richard**
**Bedford, Bedfordshire MK44 1LQ (GB)**
• **Russel, Andrew Baxter**
**Bedford, Bedfordshire MK44 1LQ (GB)**

(74) Representative: **van Benthum, Wilhelmus A. J.**
**Unilever N.V.**
**Unilever Patent Group**
**Olivier van Noortlaan 120**
**3133 AT Vlaardingen (NL)**

(56) References cited:
**EP-A- 1 520 485**    **EP-A- 1 621 084**
**EP-A1- 1 623 631**   **WO-A-2006/010425**
**WO-A-2007/039065**   **US-B1- 6 187 365**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the Invention**

The present invention relates to aerated food products and methods for producing them. In particular it relates to aerated food products containing hydrophobin.

**Background to the invention**

Aerated food products, such as ice cream, sorbet, mousse and whipped cream, contain many gas bubbles, typically 50μm in diameter. Other food products, such as low-fat spreads, dressings, sauces, etc., may also be aerated for various purposes, for example to improve texture and / or visual appearance (e.g. by whitening or opacifying). EP 1 623 631, WO 06/010425, EP 1 621 084 and WO 07/039065 disclose aerated food products that contain hydrophobins.
The effectiveness of the gas bubbles is related to their size: generally, the smaller the bubbles, the smoother and creamier the texture, and the whiter or more opaque the product. However, it is difficult to create and preserve gas bubbles with sizes of less than about 50 μm. This is because a dispersion of gas bubbles is vulnerable to coarsening by creaming, coalescence and disproportionation, resulting in fewer, larger bubbles. The smaller the gas bubbles (for a given total gas volume), the larger the surface area, and thus the greater the driving force for coarsening. EP 1 520 485 discloses a method for stabilizing a foam though protein fixation. US 6 187 365 discloses a process for the production of a molded aerated frozen bar.

**Brief Description of the Invention**

We have now found that when both hydrophobin and a surfactant are present, the efficacy of the hydrophobin is reduced. As a result it is only possible to prepare aerated food products comprising both hydrophobin and a surfactant which contain a substantial proportion of very small gas bubbles, if certain process conditions are used. Accordingly, in a first aspect, the present invention provides an aerated food product comprising hydrophobin and a surfactant, the aerated food product containing a population of gas bubbles, wherein at least 65% of the gas bubbles have a diameter of less than 20μm, with the proviso that the food product does not contain an ice structuring protein.
Preferably the food product comprises at least 0.001 wt% hydrophobin.
Preferably the hydrophobin is in isolated form.
Preferably the hydrophobin is a class II hydrophobin.
Preferably the food product comprises at least 0.05% surfactant.
Preferably the surfactant is a protein in an amount of at least 0.5% by weight of the product. Most preferably the surfactant is milk protein
Preferably the food product has an overrun of from 25 to 400%.
Preferably the food product is a frozen or chilled aerated confection.
In a second aspect the present invention provides a process for producing an aerated food product according to the first aspect of the invention, the process comprising:

a) providing a mixture of ingredients comprising hydrophobin and a surfactant;
b) aerating the mixture so that a population of gas bubbles is formed, wherein at least 65% of the gas bubbles have a diameter of less than 20μm;

with the proviso that the mixture does not contain an ice structuring protein.
Preferably the mixture is frozen during and / or after step b).
In a third aspect the present invention provides a process for producing an aerated food product according to the first aspect of the invention, the process comprising:

a) providing a mixture of ingredients comprising hydrophobin;
b) aerating the mixture so that a population of gas bubbles is formed, wherein at least 65% of the gas bubbles have a diameter of less than 20μm; and
c) adding a surfactant to the aerated mixture.

Preferably the aerated mixture is subjected to a mixing step during and / or after step c), more preferably no further gas is incorporated in the mixing step.
Preferably the mixture is frozen during and / or after step b).
In a related aspect the present invention provides frozen confections obtainable by the processes of the invention and obtained by the processes of invention.

**Detailed Description of the Invention**

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in "Ice Cream", 6th Edition, Robert T. Marshall, H. Douglas Goff and Richard W. Hartel (2003), Kluwer Academic/Plenum Publishers. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc. - and the full version entitled Current Protocols in Molecular Biology. All percentages, unless otherwise stated, refer to the percentage by weight, with the exception of percentages cited in relation to the overrun (which are defined by the equation below) and percentages cited in relation to the bubble size distribution (which refer to the normalised cumulative frequency).

Overrun

The extent of aeration is measured in terms of "overrun", which is defined as:

$$overrun = \frac{\text{weight of mix - weight of aerated product}}{\text{weight of aerated product}} \times 100$$

where the weights refer to a fixed volume of product / mix. Overrun is measured at atmospheric pressure.

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$X_n$-C-$X_{5-9}$-C-C-$X_{11-39}$-C-$X_{8-23}$-C-$X_{5-9}$-C-C-$X_{6-18}$-C-$X_m$ (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$X_n$-C-$X_{1-50}$-C-$X_{0-5}$-C-$X_{1-100}$-C-$X_{1-100}$-C-$X_{1-50}$-C-$X_{0-5}$-C-$X_{1-50}$-C-$X_m$ (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labelling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobic interfaces into amphipathic films. Assemblages of class I hydrophobins are relatively insoluble whereas those of class II hydrophobins readily dissolve in a variety of solvents.

Hydrophobin-like proteins (e.g."chaplins") have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, may form only up to one disulphide bridge since they may have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The amount of hydrophobin present in the food product will generally vary depending on the formulation and volume of the gas phase. Typically, the food product will contain at least 0.001 wt%, hydrophobin, more preferably at least 0.005 or 0.01 wt%. Typically the food product will contain less than 1 wt% hydrophobin. The hydrophobin can be from a single source or a plurality of sources e.g. the hydrophobin can be a mixture of two or more different hydrophobin polypeptides.

The hydrophobin is added in a form and in an amount such that it is available to stabilise the gas phase, i.e. the hydrophobin is deliberately introduced into the food product for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added to the food product in a form such that it is capable of self-assembly at a gas-liquid surface.

Typically, the hydrophobin is added to the food product of the invention in an isolated form, typically at least partially purified, such as at least 10% pure, based on weight of solids. By "isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

In one embodiment, the hydrophobin is added to the food product in monomeric, dimeric and/or oligomeric (i.e. consisting of 10 monomeric units or fewer) form. Preferably at least 50 wt% of the added hydrophobin is in at least one of these forms, more preferably at least 75, 80, 85 or 90 wt%. Once added, the hydrophobin will typically undergo assembly at the gas/liquid interface and therefore the amount of monomer, dimer and oligomer would be expected to decrease.

Surfactants

The term "surfactant" (or "surface active agent") as used herein means a substance which lowers the surface tension of the medium in which it is dissolved and, accordingly, positively adsorbs at the liquid/vapour interfaces.
The term includes sparingly soluble substances which lower the surface tension of a liquid by spreading spontaneously over its surface. In the context of the present invention, the term "surfactant" does not include hydrophobins.
The term "surfactant" does not include trace quantities of surface active components that may be present in very small amounts in another (non-surface active) ingredient, for example stabilisers such as pectins, locust bean gum, and guar gum. In such cases, the amount of surfactant would normally be less than 0.05% by weight of the food product.
The surfactant is typically an ingredient which is used in aerated food products because of its beneficial effect on taste and / or texture. Such surfactants include (but are not limited to):

- milk proteins such as caseins, whey (and their protein fractions), sodium caseinate, calcium caseinate, and hydrolysed whey proteins;
- other proteins such as gelatine, egg proteins, and soy protein;
- mono- and di-glycerides of saturated or unsaturated fatty acids, e.g. monoglyceryl palmitate;
- polyoxyethylene derivatives of hexahydric alcohols (usually sorbitol), glycols, glycol esters, polyglycerol esters, sorbitan esters, stearoyl lactylate, acetic acid esters, lactic acid esters, citric acid esters, acetylated monoglyceride, diacetyl tartaric acid esters, polyoxyethylene sorbitan esters (such as polysorbate 80);
- non-ionic surfactants such as alkyl poly(ethylene oxide), fatty alcohols, and sucrose esters;
- phospholipids and mixtures of phospholipids (e.g. lecithin);

and mixtures of any the above.
Preferably the surfactant is present in an amount of at least 0.05% by weight of the product, more preferably at least 0.1%. Preferably the surfactant is a protein, more preferably milk protein, and is present in an amount of at least 0.5% by weight of the food product, more preferably at least 1%. Preferably the surfactant is present in an amount of at most 20% by weight of the food product, more preferably at most 10%, most preferably at most 5%.

Ice structuring proteins

Ice structuring proteins (ISPs) are proteins that can influence the shape and size of the crystals of ice formed during freezing and also inhibit recrystallisation of ice (Clarke et al., 2002, Cryoletters 23: 89-92; Marshall et al., Ice Cream, 6th Edition, ibid.). Many of these proteins were identified originally in organisms that live in sub-zero environments and are thought to protect the organism from the deleterious effects of the formation of ice crystals in the cells of the organism. For this reason many ice structuring proteins are also known as antifreeze proteins (AFPs). An ISP is defined as a protein that has ice recrystallisation inhibitory (RI) activity, as measured by means of the modified splat assay described in WO00/53029.

Aerated food products and processes for preparing them

The term "aerated" means that gas has been intentionally incorporated into a mix, for example by mechanical means. The gas can be any gas, but is preferably, in the context of food products, a food-grade gas such as air, nitrogen, nitrous oxide, or carbon dioxide. The aerated food products of the invention contain a population of gas bubbles, wherein at least 65% of the gas bubbles have a diameter of less than 20$\mu$m. Preferably at least 75%, more preferably at least 80% of the gas bubbles have a diameter of less than 20$\mu$m. Preferably at least 50%, more preferably at least 60%, most preferably at least 75% of the gas bubbles have a diameter of less than 10$\mu$m.
Preferably the food product has an overrun of at least 20%, more preferably at least 50%, most preferably at least 80%. Preferably the food product has an overrun of at most 400%, more preferably at most 200%, most preferably at most 120%.
Without wishing to be limited by theory, it is believed that when hydrophobin and a surfactant are both present in an aerated product, they may both absorb at the surface of the gas bubbles (i.e. they compete). It is believed that a mixed hydrophobin / surfactant interface is weaker than a pure hydrophobin interface. As a result, the gas bubbles are less stable and more susceptible to coarsening, so it is harder to create and / or preserve very small gas bubbles. Hence it is difficult to produce aerated products comprising hydrophobin and a surfactant that have a large proportion of very small gas bubbles. We have now found that it is possible to prepare such aerated food products, provided that certain process conditions are used. In particular we have identified two process routes. The first route, termed "pre-aeration", provides a process for producing aerated food products containing a large proportion of small gas bubbles starting from an unaerated mix containing hydrophobin and surfactant. The second route, termed "post-addition" provides a process whereby the surfactant is added after aeration.

In the pre-aeration route, a mix (i.e. an aqueous solution and / or suspension) containing hydrophobin, surfactant and optionally other ingredients, is subjected to an aeration step. The aeration step must be of a sufficiently high "intensity" so that a large number of very small gas bubbles (less than 20 $\mu$m in diameter) are created. The intensity of the aeration process depends on a number of factors, the most important of which are the rate of energy dissipation in the aeration step, the nature of the flow experienced by the mix and the gas bubbles in the aeration step, and the viscosity and temperature of the mix. In addition, the aeration step should be long enough to achieve the desired degree of aeration (i.e. overrun).

Mechanical aerating devices are often based on a rotor which shears the mix. The rate of energy dissipation is a function of the speed of rotation of the device. Generally speaking, a high rate of energy dissipation (and hence a high rotational speed) is required to produce small gas bubbles (see for example "Chemical Engineering for the Food Industry", Fryer, Pyle and Rielly, Blackie, London, 1997).

Secondly, the effectiveness of the aeration step depends on the nature of the flow in the aerating device. Aeration is normally achieved by initially incorporating relatively large gas bubbles which are subsequently broken up into smaller ones. Elongational flow or extensional flow is known to be particularly effective at breaking up large gas bubbles, compared to simple shear flow (see e.g. Rallinson, J.M. Ann. Rev. Fluid Mech. 16, pp45-66, 1984). Suitable high shear aeration processes and devices that can provide at least a component of elongational flow include: continuous whipping in a rotor-stator device such as an Oakes mixer (E.T. Oakes Corp), a Megatron mixer (Kinematica AG), a Mondo mixer (Haas-Mondomix BV) or a Silverson mixer (Silverson Machines Inc.); gas injection followed by mixing and dispersion in a continuous flow device such as a scraped surface heat exchanger; and batch whipping involving surface entrainment of gas, using e.g. a Hobart whisk mixer (Hobart UK), Kenwood Chef mixer (Kenwood Ltd), Ultra-Turrax mixer (IKA Werke GmbH & Co. KG) or an electrical hand-held mixer, for example a Breville kitchen hand blender.

Thirdly, the effectiveness of the aeration step also depends on the viscosity and / or the temperature of the mix. By increasing the viscosity and / or lowering the temperature of the mix, the size reducing effect of the aeration device on the gas bubbles is increased.

Fourthly, the effectiveness of the aeration step also depends on the formulation of the mix. In particular it is believed that the greater the amount of the surfactant in relation to the amount of hydrophobin, the greater the competition at the interface, and hence the greater the "intensity" of the process required to produce the desired small gas bubbles.

Some examples of suitable aeration conditions are given in the examples below. Although the effectiveness of the aeration step depends on the specific details of the process and apparatus used and the mix being aerated, it is within the compass of one skilled in the art to determine the appropriate process conditions in any particular situation, by considering the factors described above. In particular, the proportion of very small gas bubbles can be increased by increasing the energy dissipated and / or by increasing the elongational flow component and / or by increasing the viscosity of the mix and / or by lowering the temperature of the mix and / or by increasing the amount of hydrophobin in relation to the amount of surfactant.

The post-addition route provides a way in which the amount of hydrophobin can be increased in relation to the amount of surfactant at the point at which the bubbles are formed whilst it remains unchanged in the final product, by adding the surfactant after aeration has taken place. Thus a mix containing hydrophobin but not surfactant is aerated; subsequently a second mix containing the surfactant is combined with the aerated mix. The second mix is formulated so that the combined mixes give the desired final product formulation. A mixing step may be used to improve the homogeneity of the combined mixes. The mixing step is preferably carried out at relatively low shear and for short times so that little or no further gas is incorporated (i.e. the overrun does not increase by more than 10% during the mixing step). Suitable mixing devices include: static mixers; in-line dynamic mixers such as an auger, blender or fruit-feeder; and batch mixing devices, such as a stirred vessel. In a batch process, the second (surfactant-containing) mix would typically be injected near the end of the processing period. The mixing step could also take place in a continuous process, for example in a scraped surface heat exchanger or screw extruder by injecting the second mix into the barrel of the scraped surface heat exchanger or screw extruder close to the point at which the product exits.

The aerated mixture may optionally be subjected to freezing during and / or after aeration, for example if the final product is to be a frozen aerated product such as an ice cream or a sorbet. Freezing may take place simultaneously with aeration, for example in a scraped surface heat exchanger. Simultaneous freezing and aeration can aid the formation of small gas bubbles because of the increase in the mix viscosity as ice forms. When freezing takes place after aeration, it is preferably carried out so that little or no further gas is incorporated. When the surfactant is added after aeration (i.e. the post-addition route) freezing may take place before and / or during the mixing step. The surfactant stream may be chilled or partially frozen before mixing.

The ice content may be increased further by subsequent freezing operations, such as low-temperature extrusion, placing the aerated mixture in a mould immersed in a bath of cold liquid such as brine or glycol, dropping portions of the aerated mixture directly into a bath of cryogenic fluid such as liquid nitrogen or placing a container containing the aerated mixture into a cold environment such as a freezer, blast freezer or cold store. The subsequent freezing step is preferably carried out at low or zero shear so that little or no further gas is incorporated.

In addition to hydrophobin and a surfactant, the aerated food products of the invention (and the mixtures from which they are made) may contain other ingredients conventionally found in food products, such as fats, sugars, salt, fruit and / or vegetable material, stabilisers, colours, flavours and acids. Preferred food products include ice cream, sorbet, mousse, whipped cream, aerated beverages such as milk shakes and smoothies, low-fat spreads (e.g. having a fat content of 0-60 wt%), dressings and sauces. Preferably the food product is a frozen or chilled aerated confection such as ice cream, sorbet or mousse.

The present invention will now be further described with reference to the following examples which are illustrative only and non-limiting, and the figures wherein:

Figure 1 shows a schematic depiction of a micrograph illustrating the guard frame concept.
Figure 2 shows SEM micrographs of the microstructure of (a) example 3 and (b) comparative example A.
Figure 3 shows the normalized cumulative frequency as a function of bubble diameter for examples 1 to 3 and comparative examples A to C.

**Examples**

**Examples 1-3: Frozen aerated products containing milk protein and hydrophobin**

Mixes were prepared using the formulations shown in Table 1 (amounts are given as weight percentages).

Table 1

| Ingredient | Examples 1, 2, 3 and comparative example B | Comparative example A | Comparative example C |
|---|---|---|---|
| Skim milk powder | 5 | 5 | 0 |
| Sucrose | 22 | 25 | 22 |
| Xanthan gum | 0.2 | 0.2 | 0.2 |
| Hydrophobin HFBII | 0.1 | 0.1 | 0.1 |
| Water | To 100 | To 100 | To 100 |

Skimmed milk powder (SMP) contained 33-36% protein, 0.8% fat, 3.7% moisture and was obtained from United Milk, UK. Xanthan gum (Keltrol RD cold dispersible) was obtained from CP Kelco. The hydrophobin HFBII was obtained from VTT Biotechnology, Finland. It had been purified from *Trichoderma reesei* essentially as described in WO00/58342 and Linder et al., 2001, Biomacromolecules 2: 511-517.

*Mix preparation*

The mixes for examples 1, 2 and comparative examples A, B and C were prepared by blending the SMP (where present), xanthan, and sucrose, and then adding the blend into water at room temperature with stirring. The mix was heated to 70°C with continuous stirring to disperse the ingredients. The mix was then cooled to 5°C and stored overnight. 20 g of a 0.5 wt% solution of hydrophobin was added to 80g of the cold mix shortly before aeration.

Example 3 was prepared as two separate mixes. The first mix was prepared as for examples 1 and 2, except that the SMP was not included. 20.4 g of a 0.49 wt% solution of hydrophobin was added to the cold mix shortly before aeration. The second mix was prepared by mixing 20g of SMP into 20g of water at room temperature with stirring for at least 2 hours. A viscous paste was obtained.

*Aeration and freezing*

The mixes for examples 1 and 2 were aerated to approximately 100% overrun using a Breville kitchen hand blender (Model HB4, Pulse Home Products, Oldham, UK) using the "beater blade" (a flat horizontal circular disc of 25mm diameter which is rotated about a vertical axis through its centre). The blender was set at maximum speed, with the "turbo" setting switched on giving a rotational speed of approximately 17,000 rpm.

The aerated mix of example 1 was then frozen dynamically in a stirred pot device. The stirred pot is a cylindrical, vertically mounted, jacketed stainless steel vessel with internal dimensions of height 105 mm and diameter 72 mm. The lid fills a large portion of the vessel leaving a working volume of 160 ml. The rotor used to shear the sample consists of a rectangular impeller of the correct dimensions to scrape the inside surface of the vessel as it rotates (72 mm x 41.5 mm) in order to remove the ice that forms there and incorporate it into the mix. Also attached to the rotor are two semi-circular (60 mm diameter) high-shear blades positioned at a 45° angle to the rectangular impeller. The vessel is surrounded by a jacket through which an ethylene glycol coolant can be flowed. The flow of coolant through the jacket is turned on and off by a valve in the coolant supply line that diverts the flow. A platinum resistance probe is mounted in the lid to allow measurement of the mix temperature during processing. A shaft-mounted torque meter allows the increase of the mix viscosity during freezing to be monitored.

160 ml of the aerated mix of example 1 was placed in the stirred pot and frozen using an impeller speed of 1000 rpm while the coolant (at -18°C) was circulated. The coolant flow was stopped when the temperature reached approximately -5.5°C and the torque was about 1 Nm. The frozen aerated product was removed from the vessel and its overrun was measured by weighing a known volume of product. Samples (approximately 15 g) were placed into small containers, cooled on dry ice for approximately 20 minutes and stored in a freezer at -80°C prior to microscopic analysis.

The aerated mix of example 2 was poured into plastic containers which were closed with lids. The pots were immersed in liquid nitrogen for about 5 minutes to freeze the product quiescently. The pots were removed from the liquid nitrogen, placed on dry ice for 20 minutes and then transferred to a - 80°C freezer prior to microscopic analysis.

The two mixes of example 3 were frozen and aerated as follows. Approximately 80 ml of the first mix was placed inside the stirred pot. The coolant flow (-18°C) was switched on and the impeller speed was initially set to 100 rpm. After 1 minute, the speed was increased to 1000 rpm to aerate the mix, and after a further 2 minutes, reduced to 300 rpm to allow greater cooling and freezing. When the mix reached a temperature of about -5°C, the coolant flow was turned off, and 10g of the second mix (containing SMP) was injected into the pot through an aperture in the lid using a syringe, while the impeller speed was maintained at 300 rpm. It was ensured that the stirred pot was completely full of mix, i.e. there was no free headspace, so that no further aeration occurred during mixing. The impeller continued to rotate for a further minute to ensure complete mixing. The frozen aerated product was removed from the vessel and its overrun was measured by weighing a known volume of product. Samples of the frozen aerated product were placed in containers, cooled in dry ice for 20 minutes then stored in a freezer at -80°C prior to microscopy analysis.

The mixes for comparative examples A and C were frozen and aerated in the stirred pot as described above for the first mix of example 3 (a second mix was not then added since the SMP was either already present or not required).

The mix for comparative example B was aerated to approximately 100% overrun using an Aerolatte hand-held battery-powered whisk (Aerolatte Ltd, Radlett Hertfordshire, UK). The whisk rotor is a wire coil shaped in a horizontal circle with an outer diameter of 22 mm rotated about a vertical axis through its centre at a rotational speed of approximately 12,000 rpm. The aerated product of comparative example B was poured into a plastic container and quiescently frozen in liquid nitrogen as described above. It was then placed on dry ice for 20 minutes and transferred to a -80°C freezer prior to microscopic analysis.

*Scanning Electron Microscopy*

The microstructure of each product was visualised using Low Temperature Scanning Electron Microscopy. Each sample was cooled to -80 °C on dry ice, and a section, approximately 5mm x 5mm x 10mm in size, was cut out and mounted on a sample holder using a Tissue Tek: OCT™ compound (PVA 11%, Carbowax 5% and 85% non-reactive components). The sample including the holder was plunged into liquid nitrogen slush and transferred to a low temperature preparation chamber (Oxford Instruments CT1500HF). The chamber was held under vacuum, approximately $10^{-4}$ bar. The sample was warmed up to -90°C for 60 to 90 seconds, thereby slowly etching the ice in order to reveal surface detail not caused by the ice itself. The sample was then cooled to -110°C and coated with gold using argon plasma with an applied pressure of $10^{-1}$ millibars and current of 6 milliamps for 45 seconds. The sample was finally transferred to a conventional scanning electron microscope (JSM 5600), fitted with an Oxford Instruments cold stage held at a temperature of -160°C. The sample was examined and representative areas were captured via digital image acquisition software

*Quantification of gas bubble size distributions*

The gas bubble size (diameter) distribution as used herein is defined as the size distribution obtained from the two dimensional representation of the three dimensional microstructure, as visualized in the SEM micrograph, determined using the following methodology.

Samples are imaged at 3 different magnifications (for reasons explained below), and the bubble size distribution of a sample is obtained from this set of micrographs in three steps:

1. Identification and sizing of the individual gas bubbles in the micrographs
2. Extraction of the size information from each micrograph
3. Combination of the data from the micrographs into a single size distribution

All of these steps, other than the initial identification of the gas bubbles, can conveniently be performed automatically on a computer, for example by using software such as MATLAB R2006a (MathWorks, Inc) software.

Identification and sizing of the individual gas bubbles in the micrographs

Firstly, a trained operator (i.e. one familiar with the microstructures of aerated systems) traces the outlines of the gas bubbles in the digital SEM images using a graphical user interface. The trained operator is able to distinguish gas bubbles from ice crystals (which are present in frozen aerated products and are the same order of magnitude in size) because the gas bubbles are approximately spherical objects of varying brightness / darkness whereas ice crystals are irregular-shaped objects of a uniform grey appearance.

Secondly, the size is calculated from the selected outline by measuring the maximum area as seen in the two dimensional cross-sectional view of the micrograph (A) as defined by the operator and multiplying this by a scaling factor defined by the microscope magnification. The bubble diameter is defined as the equivalent circular diameter $d$:

$$d = 2\sqrt{A/\pi}$$

This is an exact definition of the diameter of the two-dimensional cross-section through a perfect sphere. Since most of the gas bubbles are approximately spherical, this is a good measure of the size.

Extraction of the size information from each micrograph,

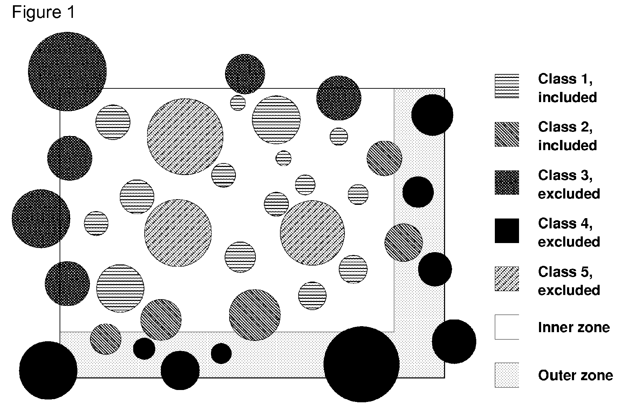

Gas bubbles which touch the border of a micrograph are only partially visible. Since it is not therefore possible to determine their area, they must be excluded. However, in doing so, systematic errors are introduced: (i) the number of gas bubbles per unit area is underestimated; and (ii) large gas bubbles are rejected relatively more often since they are more likely to touch the border, thus skewing the size distribution. To avoid these errors, a guard frame is introduced (as described in John C. Russ, "The Image Processing Handbook", second edition, CRC Press, 1995). The guard frame concept uses a virtual border to define an inner zone inside the micrograph. The inner zone forms the measurement area from which unbiased size information is obtained, as illustrated in Figure 1 (a schematic depiction of a micrograph, in which gas bubbles that touch the outer border of the micrograph have been drawn in full, even though in reality only the part falling within the actual micrograph would be observed.)

Bubbles are classified into 5 classes depending on their size and position in the micrograph. Bubbles that fall fully within the inner zone (labelled class 1) are included. Bubbles that touch the border of the virtual micrograph (class 2) are also included (since it is only a virtual border, there is fact full knowledge of these bubbles). Bubbles that touch the actual micrograph border (class 3) and / or fall within the outer zone (class 4) are excluded. The exclusion of the class 3 bubbles introduces a bias, but this is compensated for by including the bubbles in class 2, resulting in an unbiased estimate of the size distribution. Very large bubbles, i.e. those larger than the width of the outer zone (class 5), can straddle both the virtual (inner) border and the actual outer border and must therefore be excluded, again introducing bias. However, this bias only exists for bubbles that are wider than the outer zone, so it can be avoided by excluding all bubbles of at least this size (regardless of whether or not they cross the actual border). This effectively sets an upper limit to the gas bubble size that can be reliably measured in a particular micrograph. The width of the inner zone is chosen to be 10% of the vertical height of the micrograph as a trade-off between the largest bubble that can be sized (at the resolution of the particular micrograph) and the image area that is effectively thrown away (the outer zone).

There is also minimum size limit (at the resolution of the micrograph) below which the operator cannot reliably trace round gas bubbles. Therefore bubbles that are smaller than a diameter of 20 pixels are also ignored.

Combination of the data from the micrographs into a single size distribution

As explained above, it is necessary to introduce maximum and minimum cutoff bubbles sizes. In order that these minimum and maximum sizes are sufficiently small and large respectively so as not to exclude a significant number of bubbles, samples are imaged at 3 different magnifications: 100x, 300x and 1000x. Each magnification yields size information in a different range, given in Table 2.

Table 2

| Magnification | Minimum bubble size | Maximum bubble size |
|---|---|---|
| 100x | 20 $\mu$m | 83 $\mu$m |
| 300x | 6.6 $\mu$m | 28 $\mu$m |
| 1000x | 2.0 $\mu$m | 8.3 $\mu$m |

Thus bubbles as small as 2$\mu$m and as large as 83$\mu$m are counted. Visual inspection of the micrographs at high and low magnifications respectively confirmed that essentially all of the bubbles fell within this size range. The magnifications are chosen so that there is overlap between the size ranges of the different magnifications (e.g. gas bubbles with a size of 20-28 $\mu$m are covered by both the 100x and 300x micrographs) to ensure that there are no gaps between the size ranges. In order to obtain robust data, at least 500 bubbles are sized; this can typically be achieved by analysing one micrograph at 100x, one or two at x300 and two to four at x1000 for each sample.

The size information from the micrographs at different magnifications is finally combined into a single size distribution histogram. Bubbles with a diameter between 20 $\mu$m and 28 $\mu$m are obtained from both the 100x and 300x micrographs, whereas the bubbles with a diameter greater than 28 $\mu$m are extracted only from the 100x micrographs. Double counting of bubbles in the overlapping size ranges is avoided by taking account of the total area that was used to obtain the size information in each of the size ranges (which depends on the magnification), i.e. it is the number of bubbles of a certain size per unit area that is counted. This is expressed mathematically, using the following parameters:

$N$ = total number of gas cells obtained in the micrograph s
$d_k$ = the $k^{th}$ outlined gas cell with k $\in$ [1, $N]$
$A_i$ = the area of the inner zone in the $i^{th}$ micrograph
$R_i$ = the range of diameters covered by the $i^{th}$ micrograph (e.g. [20$\mu$m,83$\mu$m]) $B(j)$ = the j$^{th}$ bin covering the diameter range : [$j$ $W$, ($j$ +1) $W$)

The total area, $S(d)$, used to count gas bubbles with diameter $d$ is given by adding the areas of the inner zones ($A_i$) in the micrographs for which $d$ is within their size range ($R_i$).

$$S(d) = \sum_{i \,|\, d \in R_i} A_i$$

The final size distribution is obtained by constructing a histogram consisting of bins of width $W$ $\mu$m. $B(j)$ is the number of bubbles per unit area in the j$^{th}$ bin (i.e. in the diameter range j x W to (j+1) x W). $B(j)$ is obtained by adding up all the individual contributions of the gas bubbles with a diameter in the diameter range j x W to (j+1) x W, with the appropriate weight, i.e. 1/$S(d)$.

$$B(j) = \sum_{k \in D} 1/S(d_k)$$

where

$$D_j = \{k \,|\, d_k \in [jW, (j+1)W)\}$$

The bubble size distributions are conveniently described in terms of the normalised cumulative frequency, i.e. the total number of bubbles with diameter up to a given size, expressed as a percentage of the total number of bubbles measured.

*Results*

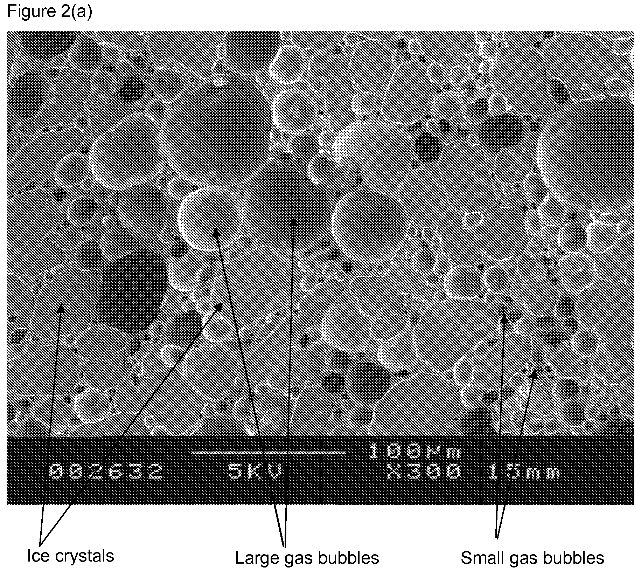

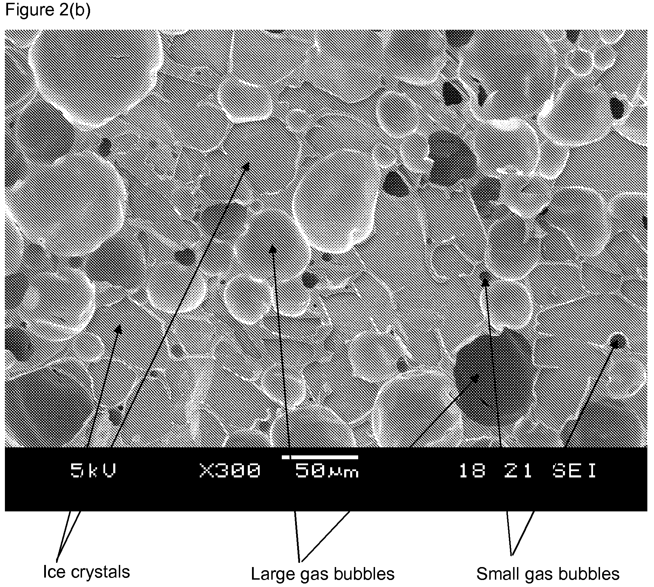

Figure 2 shows micrographs (x300 magnification) of the microstructure of (a) example 3 and (b) comparative example A. The uniformly grey, irregular-shaped objects of the order of 50 $\mu$m in size are ice crystals. The approximately spherical objects of varying darkness are the gas bubbles. In Figure 2(a) many small gas bubbles (approximately 20 $\mu$m or less in size) are apparent, as well as a number of large gas bubbles (of the order of 50 $\mu$m in size). In Figure 2(b), the large gas bubbles are similarly apparent, but there are many fewer small ones.

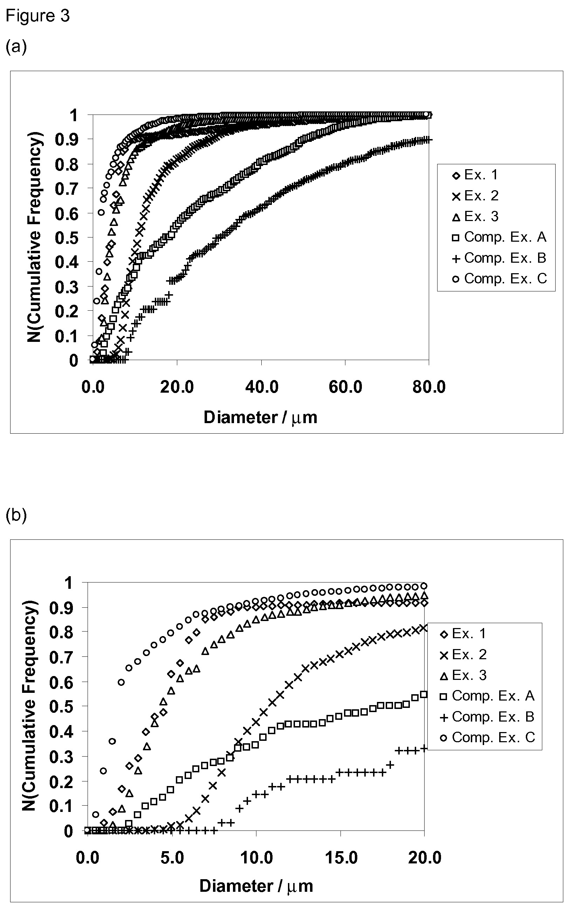

The extraction of the size data and combination into a single distribution was performed automatically, using MATLAB R2006a (MathWorks, Inc) software. The size distribution data for each of the aerated products are shown in Figure 3(a) in the form of normalised cumulative frequency (expressed as a fraction) as a function of bubble diameter from 0 to 80 $\mu$m. Figure 3 (b) shows the same data across a smaller diameter range (0 - 20 $\mu$m). The normalised cumulative frequency values (expressed as percentages) at bubble diameters of 20 and 10 $\mu$m are summarised in Table 3.

Table 3

|  | 20$\mu$m | 10$\mu$m |
|---|---|---|
| **Comparative example A** | 55 | 34 |
| **Comparative example B** | 33 | 15 |
| **Comparative example C** | 98 | 92 |
| **Example 1** | 92 | 90 |
| **Example 2** | 82 | 44 |
| **Example 3** | 95 | 85 |

Comparative examples A and B, and examples 1 and 2 were all produced by aerating and then freezing a mix containing hydrophobin and skim milk powder. Comparative examples A and B contained a relatively small proportion of bubbles having a diameter of less than 20 $\mu$m, whereas examples 1 and 2 contained a much larger proportion (>80%).

The difference between comparative example B and examples 1 and 2 was the intensity of the aeration step. In comparative example B, aeration was achieved by a relatively low shear mixing process (the Aerolatte mixer). Although the Aerolatte mixer can incorporate air, it is not very effective at causing bubble break up. In examples 1 and 2, however, the aeration step used the Breville mixer which produces more intense shear, and in particular elongation of the gas bubbles. This results not only in bulk aeration, but also the formation of very small bubbles.

Comparative example C and the first mix of example 3 (both of which contain HFB but not SMP) were aerated in the stirred pot and small gas bubbles were successfully produced (for the first mix of example 3 this is deduced from the presence of small bubbles in example 3 after the SMP had been mixed in, because no further air was incorporated during the mixing step). In contrast, when comparative example A was aerated by the same process, only a low proportion of small bubbles was produced. The difference in this case was the presence of SMP during the aeration step in comparative example A. In order to create small bubbles in the presence of SMP and HFB, a higher intensity aeration step is required (as in examples 1 and 2).

Example 3 was prepared by an alternative process in which SMP was added after aeration and freezing. A very large proportion of the gas bubbles had diameters less than 20 $\mu$m. Adding the surfactant after aeration means that there is no competition between the hydrophobin and the surfactant, so that the hydrophobin is able to stabilize very small bubbles as they are formed. Subsequent addition of the surfactant does not displace the HFB from the interface, provided that the interface is not disrupted (e.g. by high shear mixing and / or incorporation of significant further amounts of gas).

These examples demonstrate that simply aerating and freezing mixes containing hydrophobin and a surfactant does not necessarily result in aerated products containing a large proportion of very small bubbles. However, such products can be produced, provided that the aeration step is sufficiently intense to create the small bubbles or that the surfactant is added after the aeration step.

**Example 4: Frozen aerated product containing soy protein and hydrophobin**

Frozen aerated products containing soy protein as the surfactant were prepared as follows. First, two mixes (labelled 4a and 4b) were prepared using the formulations shown in Table 4. These were subsequently combined as described below to produce a frozen aerated product (labelled example 4).

Table 4

| Ingredient | **Mix 4a** (Mass / g) | **Mix 4b** (Mass / g) | **Example 4** (wt %) |
|---|---|---|---|
| Soy Protein Isolate | 0 | 3.4 | 2 |

(continued)

| Ingredient | Mix 4a (Mass / g) | Mix 4b (Mass / g) | Example 4 (wt %) |
|---|---|---|---|
| Sucrose | 42.5 | 0 | 25 |
| Xanthan Gum | 0.34 | 0 | 0.2 |
| HFB II | 0.17 | 0 | 0.1 |
| Water | 99.63 | 23.9 | 72.7 |

*Mix preparation*

Mix 4a was prepared by blending the xanthan, and sucrose, and then adding the blend into water at room temperature with stirring. The mix was heated to 70°C with continuous stirring to disperse the ingredients. The mix was then cooled to 5°C. Immediately prior to aeration, the hydrophobin was added as a 17 g aliquot of a 10 mg/mL aqueous solution.

Mix 4b was prepared by mixing the soy protein isolate (Archer Daniels Midland Company, ADM, 85% protein) in water whilst stirring. The mix was heated to 80°C with continuous stirring in order to fully disperse the protein, and then cooled to 5°C.

*Aeration and Freezing*

Mix 4a (142.6g in total) was aerated using a stirred pot device of working volume 346 mL. This device was essentially the same as that described above for Example 1. However, to provide a larger working volume, a lid with a smaller depth (22mm), and a correspondingly larger impeller (84mm in height) was used. Four semi-circular (58mm diameter) high shear blades were attached to the impeller, positioned at approximately 45° to the shaft. The blades were located in two pairs, the centre points of which were attached 21 mm and 63mm from the base of the rotating shaft.

Mix 4a was placed inside the stirred pot, the coolant flow (-15°C) was switched on and the impeller speed was set to 100 rpm. After 1 minute, the speed was increased to 1000 rpm to aerate the mix, and after a further 7 minutes, reduced to 300 rpm to allow greater cooling and freezing. After 3 minutes at 300 rpm, mix 4b (27.3 g) containing the soy protein was injected into the pot over a time of 2 minutes, whilst continuing to shear at 300 rpm. The mix was sheared for a further 1 minute at 300 rpm. The frozen aerated product (at -4.1°C and 100% overrun) was removed from the stirred pot. Finally, samples were placed in containers, blast frozen (at ca. -35°C) for 30 minutes, and stored at -80°C prior to microscopy analysis. The bubble size distribution was determined as described above and the normalised cumulative frequency values at bubble diameters of 20 and 10 $\mu$m were 95% and 81% respectively. Thus Example 4 demonstrates that frozen aerated products containing soy protein (surfactant) can be produced with significant numbers of very small bubbles.

**Example 5: Milkshake product containing very small bubbles**

A chocolate milkshake product was prepared using the formulation given in Table 5.

Table 5

| Ingredient | Amount (wt %) |
|---|---|
| Skimmed milk powder | 10.0 |
| Chocolate powder | 8.0 |
| Sucrose | 1.0 |
| Xanthan gum | 0.4 |
| Hydrophobin HFBII | 0.1 |
| Water | To 100 |

The milkshake was prepared by first dispersing the xanthan and sucrose into water at room temperature and mixed for 20 minutes to allow the xanthan to fully hydrate. The solution was then heated to 40°C. The SMP and chocolate powder (Green and Blacks, UK) were combined and then gradually added. Then the mix was heated to 80°C for 30 seconds for pasteurisation, cooled and stored overnight at 2°C.

*Aeration*

100ml of a 0.25% HFBII solution was aerated to a volume of 300ml. This was achieved by first using a hand held Breville mixer to aerate to 90% of the required overrun, then further aerating using an Aerolatte device. This foam was then added to the 300ml of cooled milkshake mix and blended carefully together to give a milkshake product with 50% overrun. A sample was blast frozen at -30°C and stored at -80°C prior to SEM analysis. The bubble size distribution was determined as described above and the normalised cumulative frequency value at bubble diameters of 20 and 10 $\mu$m were 99% and 94% respectively. Thus Example 5 demonstrates that aerated milkshake products containing SMP can be produced with significant numbers of very small bubbles.

The various features and embodiments of the present invention, referred to in individual sections above apply, as appropriate, to other sections, mutatis mutandis. Consequently features specified in one section may be combined with features specified in other sections, as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1.  An aerated food product comprising hydrophobin and a surfactant, the aerated food product containing a population of gas bubbles, wherein at least 65% of the gas bubbles have a diameter of less than 20$\mu$m, with the proviso that the food product does not contain an ice structuring protein.

2.  An aerated food product according to claim 1 which comprises at least 0.001 wt% hydrophobin.

3.  An aerated food product according to claim 1 or claim 2 wherein the hydrophobin is in isolated form.

4.  An aerated food product according to any of claims 1 to 3 wherein the hydrophobin is a class II hydrophobin.

5.  An aerated food product according to any of claims 1 to 4 wherein the food product comprises at least 0.05% surfactant.

6.  An aerated food product according to any of claims 1 to 5 wherein the surfactant is a protein in an amount of at least 0.5% by weight of the product.

7.  An aerated food product according to claim 6 wherein the protein is milk protein.

8.  An aerated food product according to any preceding claim wherein the food product has an overrun of from 25 to 400%.

9.  An aerated food product according to any preceding claim which is a frozen or chilled aerated confection.

10. A process for producing an aerated food product according to any of claims 1 to 9, the process comprising:

    a) providing a mixture of ingredients comprising hydrophobin and a surfactant;
    b) aerating the mixture so that a population of gas bubbles is formed, wherein at least 65% of the gas bubbles have a diameter of less than 20$\mu$m;

    with the proviso that the mixture does not contain an ice structuring protein.

11. A process according to claim 10 wherein the mixture is frozen during and / or after step b).

12. A process for producing an aerated food product according to any of claims 1 to 9, the process comprising:

a) providing a mixture of ingredients comprising hydrophobin;
b) aerating the mixture so that a population of gas bubbles is formed, wherein at least 65% of the gas bubbles have a diameter of less than 20μm; and
c) adding a surfactant to the aerated mixture.

**13.** A process according to claim 12 wherein the aerated mixture is subjected to a mixing step during and / or after step c).

**14.** A process according to claim 12 or claim 13 wherein the mixture is frozen during and / or after step b).

**Patentansprüche**

**1.** Belüftetes Lebensmittelprodukt, umfassend Hydrophobin und ein Tensid, wobei das belüftete Lebensmittelprodukt eine Population von Gasblasen enthält, wobei mindestens 65% der Gasblasen einen Durchmesser von weniger als 20 μm aufweisen, dies mit der Maßgabe, dass das Lebensmittelprodukt kein Eis-strukturierendes Protein enthält.

**2.** Belüftetes Lebensmittelprodukt nach Anspruch 1, welches mindestens 0,001 Gew.-% Hydrophobin umfasst.

**3.** Belüftetes Lebensmittelprodukt nach Anspruch 1 oder 2, wobei das Hydrophobin in isolierter Form vorliegt.

**4.** Belüftetes Lebensmittelprodukt nach irgendeinem der Ansprüche 1 bis 3, wobei das Hydrophobin ein Hydrophobin der Klasse II darstellt.

**5.** Belüftetes Lebensmittelprodukt nach irgendeinem der Ansprüche 1 bis 4, wobei das Lebensmittelprodukt mindestens 0,05% Tensid umfasst.

**6.** Belüftetes Lebensmittelprodukt nach irgendeinem der Ansprüche 1 bis 5, wobei das Tensid ein Protein in einer Menge von mindestens 0,5 Gewichts-% des Produktes ist.

**7.** Belüftetes Lebensmittelprodukt nach Anspruch 6, wobei das Protein Milchprotein ist.

**8.** Belüftetes Lebensmittelprodukt nach irgendeinem vorhergehenden Anspruch, wobei das Lebensmittelprodukt einen Überlauf von 25 bis 400% aufweist.

**9.** Belüftetes Lebensmittelprodukt nach irgendeinem vorhergehenden Anspruch, welches ein gefrorenes oder abgekühltes belüftetes Konfekt ist.

**10.** Verfahren zur Herstellung eines belüfteten Lebensmittelprodukts nach irgendeinem der Ansprüche 1 bis 9, wobei das Verfahren umfasst:

a) Bereitstellen einer Mischung von Bestandteilen, die Hydrophobin und ein Tensid umfasst,
b) Belüften der Mischung derartig, dass eine Population von Gasblasen gebildet wird, wobei mindestens 65% der Gasblasen einen Durchmesser von weniger als 20 μm aufweisen,

dies mit der Maßgabe, dass die Mischung kein Eis-strukturierendes Protein enthält.

**11.** Verfahren nach Anspruch 10, wobei die Mischung während und/oder nach Schritt b) gefroren wird.

**12.** Verfahren zur Herstellung eines belüfteten Lebensmittelproduktes nach irgendeinem der Ansprüche 1 bis 9, wobei das Verfahren umfasst:

a) Bereitstellen einer Mischung von Bestandteilen, die Hydrophobin umfasst,
b) Belüften der Mischung derartig, dass eine Population von Gasblasen gebildet wird, wobei mindestens 65% der Gasblasen einen Durchmesser von weniger als 20 μm aufweisen, und
c) Zugeben eines Tensids zu der belüfteten Mischung.

**13.** Verfahren nach Anspruch 12, wobei die belüftete Mischung einem Mischschritt während und/oder nach Schritt c) unterworfen wird.

**14.** Verfahren nach Anspruch 12 oder 13, wobei die Mischung während und/oder nach Schritt b) gefroren wird.

**Revendications**

**1.** Produit alimentaire aéré comprenant de l'hydrophobine et un tensioactif, le produit alimentaire aéré contenant une population de bulles de gaz, dans lequel au moins 65 % des bulles de gaz présentent un diamètre inférieur à 20 $\mu$m, à condition que le produit alimentaire ne contienne pas une protéine structurante de glace.

**2.** Produit alimentaire aéré selon la revendication 1, lequel. comprend au moins 0,001 % en masse d'hydrophobine.

**3.** Produit alimentaire aéré selon la revendication 1 ou la revendication 2, dans lequel l'hydrophobine est dans une forme isolée.

**4.** Produit alimentaire aéré selon l'une quelconque des revendications 1 à 3, dans lequel l'hydrophobine est une hydrophobine de classe II.

**5.** Produit alimentaire aéré selon l'une quelconque des revendications 1 à 4, dans lequel le produit alimentaire comprend au moins 0,05 % de tensioactif.

**6.** Produit alimentaire aéré selon l'une quelconque des revendications 1 à 5, dans lequel le tensioactif est une protéine dans une quantité d'au moins 0,5 % en masse du produit.

**7.** Produit alimentaire aéré selon la revendication 6, dans lequel la protéine est une protéine de lait.

**8.** Produit alimentaire aéré selon l'une quelconque des revendications précédentes, dans lequel le produit alimentaire présente un dépassement de 25 à 400 %.

**9.** Produit alimentaire aéré selon l'une quelconque des revendications précédentes, lequel est une confiserie aérée glacée ou refroidie.

**10.** Procédé de production d'un produit alimentaire aéré selon l'une quelconque des revendications 1 à 9, le procédé comprenant :

a) la fourniture d'un mélange d'ingrédients comprenant de l'hydrophobine et un tensioactif ;
b) l'aération du mélange de sorte qu'une population de bulles de gaz est formée, où au moins 65 % des bulles de gaz présentent un diamètre inférieur à 20 $\mu$m ;

à condition que le mélange ne contienne pas une protéine structurante de glace.

**11.** Procédé selon la revendication 10, dans lequel le mélange est congelé pendant et/ou après l'étape b).

**12.** Procédé de production d'un produit alimentaire aéré selon l'une quelconque des revendications 1 à 9, le procédé comprenant :

a) la fourniture d'un mélange d'ingrédients comprenant de l'hydrophobine ;
b) l'aération du mélange de sorte qu'une population de bulles de gaz est formée, où au moins 65 % des bulles de gaz présentent un diamètre inférieur à 20 $\mu$m ; et
c) l'addition d'un tensioactif au mélange aéré.

**13.** Procédé selon la revendication 12, dans lequel le mélange aéré est soumis à une étape de mélange pendant et/ou après l'étape c).

**14.** Procédé selon la revendication 12 ou la revendication 13, dans lequel le mélange est congelé pendant et/ou après l'étape b).

Figure 1

| | |
|---|---|
| | Class 1, included |
| | Class 2, included |
| | Class 3, excluded |
| | Class 4, excluded |
| | Class 5, excluded |
| | Inner zone |
| | Outer zone |

Figure 2(a)

Ice crystals          Large gas bubbles          Small gas bubbles

Figure 2(b)

Ice crystals          Large gas bubbles          Small gas bubbles

Figure 3

(a)

(b)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1623631 A
- WO 06010425 A
- EP 1621084 A
- WO 07039065 A
- EP 1520485 A
- US 6187365 B
- WO 0174864 A
- WO 9641882 A
- WO 0157076 A
- WO 0053029 A
- WO 0058342 A

**Non-patent literature cited in the description**

- **ROBERT T. MARSHALL ; H. DOUGLAS GOFF A ; RICHARD W. HARTEL.** Ice Cream. Kluwer Academic/Plenum Publishers, 2003
- **SAMBROOK et al.** Molecular Cloning: A Laboratory Manual. Cold Spring Harbor Laboratory Press, 2001
- Short Protocols in Molecular Biology. John Wiley & Sons, Inc, 1999
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **TALBOT.** *Curr. Biol,* 2003, vol. 13, R696-R698
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **CLARKE et al.** *Cryoletters,* 2002, vol. 23, 89-92
- **MARSHALL et al.** ce Cream
- **FRYER ; PYLE ; RIELLY ; BLACKIE.** *Chemical Engineering for the Food Industry,* 1997
- **RALLINSON, J.M.** *Ann. Rev. Fluid Mech.,* 1984, vol. 16, 45-66
- **LINDER et al.** *Biomacromolecules,* 2001, vol. 2, 511-517
- **JOHN C. RUSS.** The Image Processing Handbook. CRC Press, 1995